Europäisches Patentamt

European Patent Office

Office européen des brevets

(11) Numéro de publication: **0 143 010**

**A1**

## (12) DEMANDE DE BREVET EUROPEEN

(21) Numéro de dépôt: **84401698.0**

(51) Int. Cl.⁴: **H 04 N 7/13**

(22) Date de dépôt: **21.08.84**

(30) Priorité: **30.08.83 FR 8313910**

(43) Date de publication de la demande:
**29.05.85 Bulletin 85/22**

(84) Etats contractants désignés:
**DE GB IT NL**

(71) Demandeur: **THOMSON-CSF
173, Boulevard Haussmann
F-75379 Paris Cedex 08(FR)**

(72) Inventeur: **Catros, Jean-Yves
THOMSON-CSF SCPI 173, bld Haussmann
F-75379 Paris Cedex 08(FR)**

(72) Inventeur: **Chapuis, Franck
THOMSON-CSF SCPI 173, bld Haussmann
F-75379 Paris Cedex 08(FR)**

(72) Inventeur: **Malo-Renault, François
THOMSON-CSF SCPI 173, bld Haussmann
F-75379 Paris Cedex 08(FR)**

(74) Mandataire: **Lincot, Georges et al,
THOMSON-CSF SCPI 173, Bld Haussmann
F-75379 Paris Cedex 08(FR)**

(54) **Procédé et dispositif de détection de points en mouvement dans une image de télévision pour système de télévision numérique à compression de débit à rafraîchissement conditionnel.**

(57) Le dispositif selon l'invention consiste à calculer un indicateur de gradient ($I_g$) de luminance et/ou de chrominance en chaque point de l'image, à calculer en fonction de chaque indicateur obtenu une valeur de seuil ($S(X_o)$), à mesurer la différence de luminance et/ou de chrominance inter-image de chaque point de l'image, à comparer la différence inter-image obtenue en chaque point à la valeur de seuil correspondante calculée, à appliquer le résultat de la comparaison à l'entrée d'un dispositif de filtrage par densité (19) pour détecter la densité de points en mouvement proches de chaque point analysé et à comparer la densité obtenue pour chaque point à un seuil de densité prédéterminé pour fournir une indication de points en mouvement lorsque la densité en chaque point considéré dépasse le seuil de densité prédéterminé.

Application: Système de compression de données numériques en télévision.

Fig.2

EP 0 143 010 A1

Procédé et dispositif de détection de points en mouvement dans une
image de télévision pour systèmes de télévision numérique
à compression de débit, à rafraîchissement conditionnel

L'invention concerne un procédé et un dispositif de détection de points en mouvement dans une image de télévision pour systèmes de télévision numérique à compression de débit, à rafraîchissement conditionnel selon lesquels les images reçues ne sont mises à jour ou rafraîchies que pour les points significatifs de l'image qui sont en mouvement.

Elle s'applique plus particulièrement à la réalisation de détecteurs de mouvement, à seuil adaptatif pour réduire en télévision numérique les détections parasites dues au bruit inter-image, en fournissant une méthode de filtrage par densité permettant le filtrage de toute image de télévision binaire et/ou l'obtention de zones pontées uniformes par élimination des petites zones ou plaques jugées indésirables dans ces zones.

Des procédés de détection de points en mouvement dans une image pour comprimer le débit binaire d'image de télévision codée entre émetteur et récepteur sont bien connus et consistent, pour la plupart, à sélectionner des informations relatives aux points d'image qui ont changé d'une quantité appréciable d'une image à la suivante, en vue de les transmettre sur le canal de transmission reliant l'émetteur aux différents récepteurs de télévision.

Des dispositifs de détection de mouvement, encore appelés détecteurs de mouvement, sont également bien connus et réalisent pour chaque image de télévision à coder la segmentation entre les zones fixes et en mouvement de l'image.

En principe, une comparaison de la différence de luminance inter-image de points homologues à un simple seuil est suffisante pour séparer les deux types de zones. Cependant, en pratique, la séparation s'avère imparfaite à cause, d'une part, du bruit d'origine analogique ou numérique qui est toujours présent dans une séquence d'image et qui entraine des confusions sur l'état statique ou mobile des points de l'image et d'autre part, des contraintes en débit imposées sur le canal de transmission.

La difficulté provient du fait que l'on ne peut pas, en agissant sur le réglage du simple seuil de détection des détecteurs de mouvement existants, obtenir à la fois un bon rendu des zones en mouvement et un débit faible sur le canal de transmission. En effet, en augmentant le seuil de détection pour ne pas détecter le bruit de fond, on obtient des zones en mouvement mal rendues au niveau du décodeur du récepteur alors qu'en diminuant le seuil de détection pour restituer correctement les mouvements de l'image on laisse passer de plus en plus de bruit de fond en augmentant par voie de conséquence le débit binaire des informations ou données transmises.

L'invention a pour but de pallier les inconvénients précités.

A cet effet l'invention a pour objet, un procédé de détection de points en mouvement dans une image de télévision pour systèmes de télévision numérique à compression de débit, à rafraîchissement conditionnel caractérisé en ce qu'il consiste à calculer un indicateur de gradient de luminance et/ou de chrominance en chaque point de l'image, à calculer en fonction de chaque gradient obtenu une valeur de seuil, à mesurer la différence de luminance et/ou de chrominance inter-image de chaque point de l'image, à comparer la différence inter-image obtenue en chaque point à la valeur de seuil correspondante calculée, à appliquer le résultat de la comparaison à l'entrée d'un dispositif de filtrage par densité, pour détecter la densité de points en mouvement proches de chaque point analysé et à comparer la densité obtenue en chaque point analysé à un seuil de densité prédéterminé, pour déclarer chaque point analysé en mouvement lorsque, la densité qui lui correspond dépasse le seuil de densité prédéterminé.

L'invention a également pour objet un dispositif pour la mise en oeuvre du procédé précité.

Le procédé et le dispositif selon l'invention ont pour principal avantage qu'ils permettent un meilleur rendu des zones en mouvement. Ces objectifs sont principalement atteints grâce au fait que le seuil de comparaison de la différence inter-image n'est plus fixe mais évolue en fonction de la zone à l'intérieur de laquelle la différence inter-image est détectée et que ce seuil est plus important pour les zones à texture ou à contours, que dans les zones uniformes de l'image, ce qui évite les détections parasites dues à l'instabilité des signaux d'échantillonnage sur les contours, et permet d'éviter le phénomène de dégradation de type vitre sale. Le bruit parasite restant est filtré à l'aide du filtre de densité.

D'autres caractéristiques et avantages de l'invention apparaîtront également à l'aide de la description faite au regard des dessins annexés donnés uniquement à titre d'exemple et dans lesquels :

- la figure 1 représente un schéma synoptique général d'un système de transmission d'image de télévision à compression de débit à rafraîchissement conditionnel ;

- la figure 2 est un schéma de principe du détecteur de mouvement selon l'invention ;

- les figures 3 et 4 représentent de façon détaillée un mode de réalisation du détecteur de mouvement selon l'invention.

Pour ne pas détecter de bruit de fond dans les zones à contour ou à texture de l'image, le procédé selon l'invention vise à relever automatiquement le seuil de détection des points en mouvement de l'image dans ces zones. Il consiste dans une première étape à mesurer les valeurs $X_i$ de luminance et/ou de chrominance de chaque point de l'image pour calculer en chaque point $P_o$ dans l'image courante et/ou précédente un indicateur de gradient $I_g$ défini par exemple, par une opération de la forme

$$I_g = \left[ \sum_{i=1}^{N} \left| X_o - X_i \right| \right] \times \frac{1}{N} \qquad (1)$$

ou encore de la forme

$$I_g = \max_{i=1...N} \left\{ \left| X_o - X_i \right| \right\} \qquad (2)$$

où $X_o$ désigne la luminance et/ou la chrominance du point $P_o$, $X_i$ désigne la luminance et/ou la chrominance d'un point $P_i$ voisin du point $P_o$ précédant ou succédant directement le point $P_o$ selon des directions déterminées de l'image, par exemple selon ses directions horizontales ou verticales, $\left| X_o - X_i \right|$ désigne la valeur absolue de l'écart des luminances et/ou de chrominance des points voisins $P_o$ et $P_i$, et $N$ désigne le nombre de points voisins.

Selon une autre variante de réalisation de l'invention la première étape du procédé pourra également consister à comparer en chaque point analysé dans l'image courante l'écart maximum de luminance et/ou de chrominance entre le point courant analysé et chacun de ses points voisins, à l'écart maximum de luminance et/ou de chrominance du point homologue au point courant analysé dans l'image précédente avec ceux de ses points voisins également compris dans l'image précédente et à choisir comme indicateur de gradient l'écart maximum obtenu pour le point analysé dans l'une ou l'autre image qui est le plus faible. Cette dernière méthode a pour avantage qu'elle permet en choisissant l'écart le plus faible d'obtenir dans la suite du procédé un seuil de comparaison moins élevé ce qui évite de perdre des points réellement en mouvement.

La deuxième étape du procédé consiste à attribuer pour chaque point $P_o$ de l'image une valeur de seuil $S(X_o)$ en fonction de l'indicateur de gradient calculé lors de la première étape, avec pour condition que le seuil $S(X_o)$ reste compris entre deux valeurs de seuil minimum et maximum respectivement $S_{MIN}$, $S_{MAX}$ pour ne pas coder trop de bruit dans les zones uniformes et ne pas perdre des zones ayant réellement bougé, telles que des zones en mouvement présentant des contours ou des textures. En application de ce principe, le seuil $S(X_o)$ est déterminé, de manière par exemple, à être proportionnel à l'indicateur de gradient $I_g$ suivant les relations

$$S(X_o) = k \times I_g \tag{3}$$

$$\text{avec } S_{MIN} \langle\!\langle S(X_o) \rangle\!\langle S_{MAX} \text{ (4) et } k \in [0,1]$$

La troisième étape du procédé consiste à calculer pour chaque point $P_i$, la différence de luminance et/ou de chrominance inter-image et à comparer la différence obtenue à la valeur du seuil $S(X_i)$ correspondante qui a été précédemment calculée à l'étape précédente, de façon à obtenir une première image binaire des zones de l'image présumées en mouvement.

Enfin la quatrième étape du procédé consiste à appliquer le résultat de la comparaison, obtenu à l'étape précédente, à l'entrée d'un dispositif de filtrage par densité pour détecter la densité de points présumés en mouvement proches de chaque point d'image analysé, à l'intérieur d'un espace autour de chaque point analysé et à comparer la densité obtenue en chaque point $P_i$ à un seuil de densité déterminé pour fournir une indication de point en mouvement lorsque la densité trouvée autour de chaque point analysé dépasse un seuil de référence déterminé.

A titre d'exemple, l'espace entourant chaque point analysé à l'intérieur duquel est estimée la densité des points en mouvement proches du point analysé peut être défini par une fenêtre de dimension p x q , où p désigne par exemple le nombre de points pris en considération dans la direction horizontale et q désigne le nombre de points pris en considération dans la direction verticale.

Comme généralement la densité des points détectés à la troisième étape, correspondant au bruit parasite au fond de l'image, est plus faible que celle correspondant au mouvement, la quatrième étape du procédé fournit un moyen efficace pour segmenter correctement l'image en zones fixes et zones en mouvement.

L'estimation de la densité est effectuée de manière simple en comptant le nombre de points de valeur binaire déterminée (0 ou 1) à l'intérieur de la fenêtre, obtenu à la troisième étape. Suivant ce processus la densité de valeur binaire j en un point $P_i$ quelconque sera exprimée par exemple par la relation

$$dj_{(i)} = \frac{\sum \text{ des points de valeur j dans la fenêtre}}{q \times p} \qquad (5)$$

avec j = 1 ou 0.

Dans ces conditions la relation

$$dl_{(i)} = 1 - do_{(i)} \qquad (6)$$

est toujours vérifiée.

On supposera dans la suite de la description que les points en mouvement sont des points pour lesquels j = 1.

Le filtrage peut être effectué suivant deux méthodes. Selon une première méthode la densité $dl_{(i)}$ de points en mouvement pour lesquels j = 1 est comparée à un seuil de densité de référence $S_d$ déterminé, et si $dl_{(i)} \rangle S_d$ , le point $P_i$ considéré est déclaré en mouvement.

Selon une deuxième méthode un pontage à deux dimensions est effectué en plus du filtrage par densité précédemment décrit. Dans ce cas, la densité est calculée en estimant la densité pour tous les points, ceux pour lesquels j = 0 et ceux pour lesquels j = 1.

Comme dans le cas précédent si $dl_{(i)} > S_d$, $S_d$ étant un seuil de densité de référence déterminé, le point $P_i$ est considéré en mouvement. Dans le cas contraire le point $P_i$ est déclaré fixe. L'une ou l'autre de ces méthodes pourra être retenue.

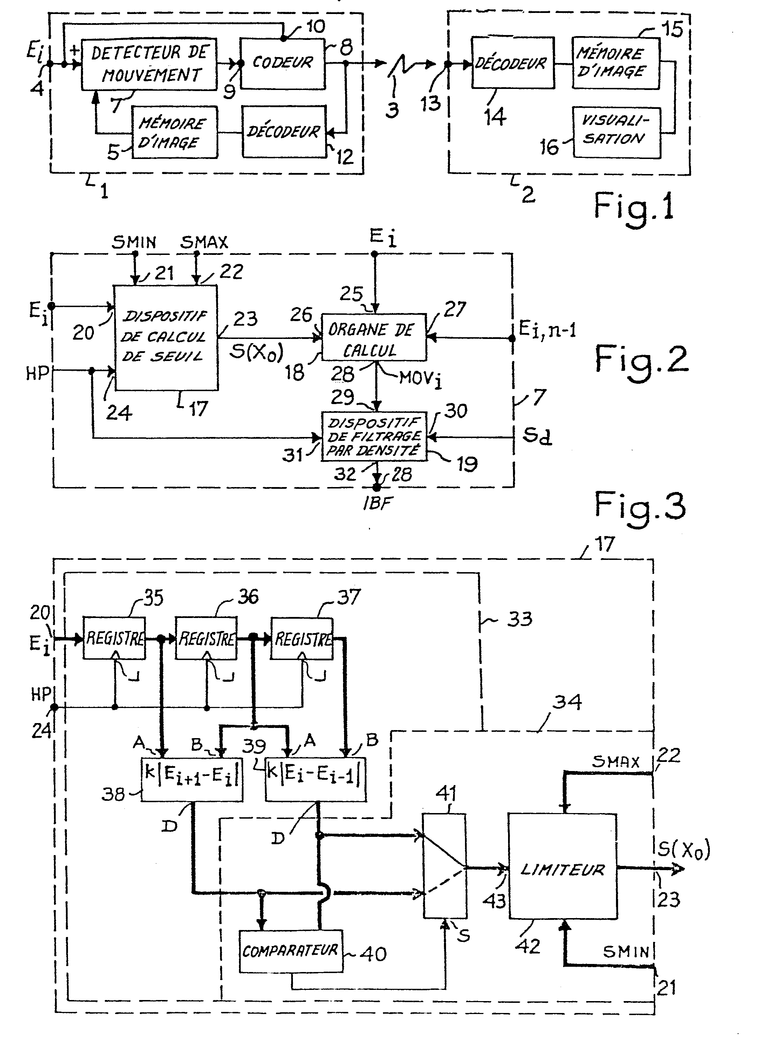

Un système de transmission d'image de télévision à compression de débit et à rafraîchissement conditionnel faisant application du procédé selon l'invention est représenté à la figure 1. Il comprend de façon connue une partie émission 1, une partie réception 2, reliées entre elles par un canal de transmission 3. La partie émission 1 comprend, une entrée 4 sur laquelle sont appliqués des échantillons numériques $E_i$ de signaux vidéo fournis par une caméra de télévision extérieure au système, non représentée, une mémoire d'image 5, un détecteur de mouvement 7 couplé par une entrée à la sortie de la mémoire 5 et sur une autre entrée à l'entrée 4 de la partie émission 1, un codeur 8 couplé, respectivement par ses entrées 9 et 10, d'une part, à la sortie du détecteur de mouvement 7 et d'autre part, à l'entrée 4 de la partie émission 1 et couplé par sa sortie au canal de liaison 3, ainsi qu'un décodeur 12 couplé par son entrée à la sortie du codeur 8 et couplé par sa sortie à l'entrée de la mémoire d'image 5. La partie réception 2 est couplée par son entrée 13 au canal de transmission 3 et comprend un décodeur 14 et une mémoire d'image 15 reliés en série entre le point d'entrée 13 et un dispositif de visualisation 16.

Le système représenté à la figure 1 permet, grâce au détecteur de mouvement 7, d'évaluer la différence inter-image de l'information de luminance et/ou de chrominance accompagnant chaque point d'image à coder qui décide quels sont les points de l'image qui doivent être déclarés comme ayant changés d'une image à l'autre. Le codeur 8, sous le contrôle du détecteur de mouvement 7, calcule, pour les points qui ont changé, une information codée de luminance et d'adresse qu'il transmet, de façon connue, au moyen d'un organe d'émission, non représenté, sur le canal de liaison 3. A la réception les éléments binaires codés de luminance et d'adresse sont décodés par le décodeur 14 puis, sont transmis à l'intérieur de la mémoire d'image 15 pour rafraîchir l'image qui a été précédemment stockée dans cette mémoire. Le décodeur 12 de la partie émission permet de disposer côté émetteur de la même information que l'information décodée par le décodeur 14 au récepteur et de rafraîchir l'image précédente qui a été stockée également dans la mémoire d'image 5 de la partie émission de sorte que, en l'absence d'erreur, les mémoires d'image 5 et 15 disposent au même moment de la même image codée sous une forme binaire.

Un schéma de principe du détecteur de mouvement 7 selon l'invention est représenté à la figure 2. Le détecteur de mouvement 7 représenté à la figure 2 comprend, un dispositif de calcul de seuil 17 du seuil à utiliser pour détecter le mouvement de chaque point d'image, un organe de calcul 18 de la différence inter-image et de comparaison, sensible au seuil calculé par le dispositif de calcul de seuil 17 ainsi qu'un dispositif de filtrage par densité 19 pour détecter la densité de points en mouvement proches de chaque point analysé et comparer la densité obtenue autour de chaque point, à un seuil de densité prédéterminé, pour définir, à partir de ce seuil, l'indication de points en mouvement. L'échantillon $E_i$ du signal vidéo en cours d'analyse est appliqué à l'entrée 20 du dispositif de calcul de seuil 17 et est utilisé pour calculer l'indicateur de gradient local $I_g$ selon la première étape du procédé de la présente invention, et pour calculer un seuil $S(X_o)$ en fonction de la valeur du gradient obtenu, ce seuil étant par exemple défini conformément à la relation (3) du procédé précédemment décrit en vérifiant, toujours selon ce procédé, que la valeur de seuil obtenue est comprise entre deux limites de seuils $S_{MAX}$ et $S_{MIN}$, appliquées par des dispositifs extérieurs au détecteur de mouvement non représentés. Les valeurs $S_{MAX}$ et $S_{MIN}$ sont définies comme indiquées précédemment, de manière, à ne pas coder trop de bruit dans les zones uniformes de l'image et à éviter de perdre des zones ayant réellement bougées, comme cela pourrait être le cas par exemple, pour des zones en mouvement présentant des contours ou des textures. L'information de seuil calculée $S(X_o)$, est obtenue à la sortie 23 du dispositif de calcul de seuil en synchronisation avec des signaux HP d'horloge point appliqués sur l'entrée 24 du dispositif de calcul 17 et dont la période correspond en temps, à la durée séparant deux échantillons $E_i$ et $E_{i+1}$ d'image successifs.

L'organe de calcul 18 comprend trois entrées notées respectivement 25, 26 et 27. L'entrée 25 reçoit l'échantillon de signal vidéo courant $E_{i,n}$. L'entrée 26 est reliée directement à la sortie 23 du dispositif de calcul 17 transmettant la valeur du seuil calculé $S(X_o)$. L'entrée 27 reçoit un échantillon de signal, homologue à l'échantillon d'image analysé de l'image précédente $E_{i,n-1}$. L'organe de calcul 18 est relié par sa sortie 28 à l'entrée 29 du dispositif de filtrage par densité 19 dont les deux autres entrées 30 et 31 reçoivent respectivement une information binaire Sd correspondant au seuil de référence de densité estimé ainsi que les signaux d'horloge HP déjà appliqués sur l'entrée 24 du dispositif de calcul de seuil 17. La sortie 32 du dispositif de filtrage par densité 19 fournit un signal IBF dont le niveau logique 0 ou 1 indique l'état de mouvement ou de non mouvement du point d'image analysé.

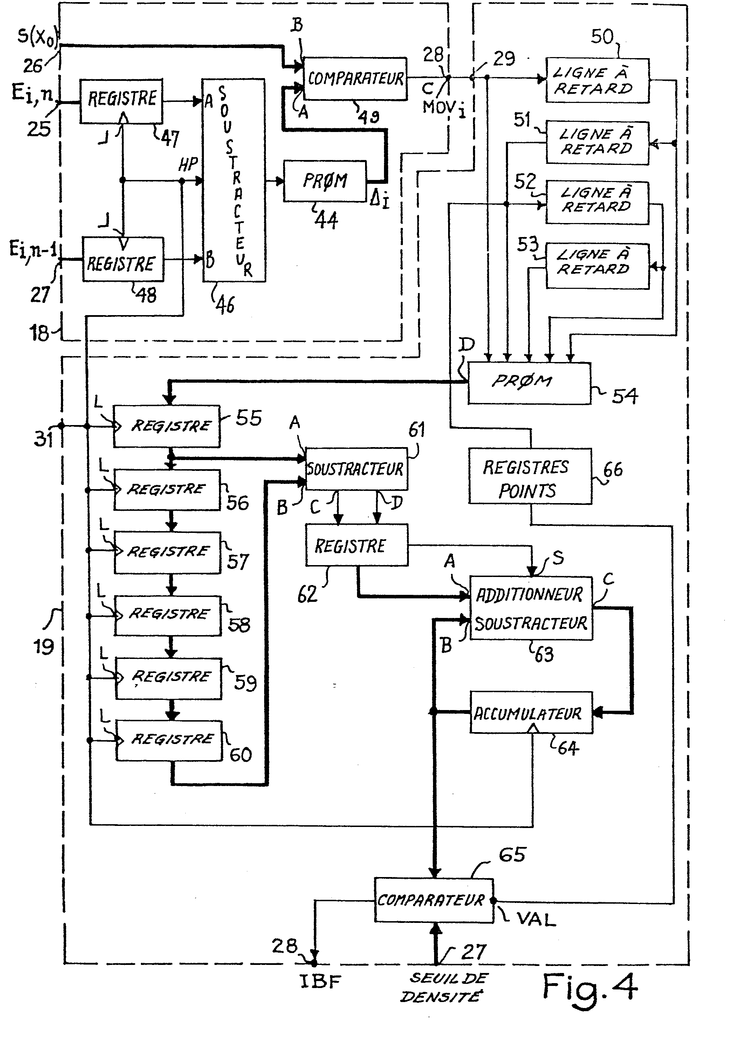

Une réalisation possible du dispositif de calcul de seuil 17 est représentée à la figure 3. Celui-ci comprend un organe de mesure 33 et un dispositif de calcul 34 représentés tous les deux à l'intérieur de lignes en pointillés. L'organe de mesure 33 mesure le gradient de luminance en chaque point de l'image en effectuant des comparaisons entre l'échantillon de luminance et/ou de chrominance de chaque point appliqué sur l'entrée 20 du dispositif 17 aux échantillons voisins situés sur la même ligne d'image. Cette mesure est effectuée à l'aide de registres 35, 36 et 37 et de moyens de calcul 38 et 39. Les registres 35, 36 et 37 sont composés chacun par exemple de huit basculeurs, chaque basculeur pouvant mémoriser 1 bit, de manière à permettre la mémorisation dans chaque registre d'un échantillon numérique formé de 8 éléments binaires. Les registres 35, 36, 37 sont montés en série, les sorties des basculeurs du registre 35 étant reliées aux entrées correspondantes du registre 36 et les sorties du basculeur de registre 36 étant reliées aux entrées correspondantes du registre 37. Les entrées du registre 35 sont reliées à l'entrée 20 du dispositif de calcul de seuil 17 et les entrées de commande L de chaque registre 35, 36, et 37 sont reliées à l'entrée 24 du dispositif de calcul de seuil 17, pour permettre le transfert de chaque échantillon de luminance appliqué sur l'entrée 20 successivement dans chacun des registres 35, 36 et 37. Dans le mode de réalisation de la figure 3, les moyens de calcul 38, 39 sont constitués par des mémoires programmables type PROM ayant chacune des entrées d'adresse A et B et une sortie de données D. Les entrées d'adresse A des mémoires 38 et 39 sont reliées respectivement aux sorties des registres 35 et 36 et les entrées d'adresse B sont reliées respectivement aux sorties des registres 36 et 37. Les mémoires 38 et 39 contiennent chacune des tables de valeurs absolues adressables respectivement à partir des contenus des registres 35 et 36 d'une part et 36 et 37 d'autre part. Les mémoires 38 et 39 restituent sur leur sortie D respectivement une donnée égale à $k \left| E_{i+1} - E_i \right|$ et une donnée égale à $k \left| E_i - E_{i-1} \right|$ où k est une valeur quelconque appartenant à l'intervalle $\left[ 0,1 \right]$ et où $E_{i+1}$, $E_i$ et $E_{i-1}$ désignent respectivement les contenus des registres 35, 36 et 37.

Le dispositif de calcul de seuil 34 comprend un comparateur 40, un aiguilleur 41, et un organe limiteur 42. Le comparateur 40 possède deux entrées reliées respectivement aux sorties D des mémoires 38 et 39 et transmet le résultat de la comparaison à l'entrée de commande S de l'aiguilleur 41. L'aiguilleur 41 transmet à l'entrée 43 du limiteur 42, soit la donnée obtenue en sortie de la mémoire 38 lorsque la relation

$$k \left| E_{i+1} - E_i \right| \geqslant k \left| E_i - E_{i-1} \right|$$

contrôlée par le comparateur 40 est satisfaite, soit la donnée obtenue en sortie de la mémoire 39 lorsque la relation inverse est satisfaite.

La valeur de seuil $S(X_o) = Max \left[ k \left| E_{i+1} - E_i \right| , k \left| E_i - E_{i-1} \right| \right]$ ainsi calculée est transmise à l'organe limiteur 42 pour être comparée aux valeurs de seuil $S_{MAX}$ et $S_{MIN}$ provenant des entrées 21 et 22 du dispositif de calcul de seuil 17.

Le limiteur 42 transmet la valeur $S(X_o)$ calculée à l'organe de calcul de la différence inter-image et de comparaison 18, en maintenant cette valeur entre les deux valeurs de seuils $S_{MAX}$ et $S_{MIN}$ suivant la relation :

$$S_{MIN} \leqslant S(X_o) \leqslant S_{MAX}$$

Comme indiqué précédemment, la valeur de seuil minimum $S_{MIN}$ est choisie de manière à ne pas coder trop de bruit dans les zones uniformes de l'image et la valeur $S_{MAX}$ est choisie de manière à ne pas perdre des zones présentant des contours ou des textures qui ont fortement bougés.

L'organe de calcul 18 et le dispositif de filtrage par densité 19 sont représentés à la figure 4. L'organe de calcul 18 calcule la valeur absolue de la différence inter-image $\Delta_i = \left| E_{i,n} - E_{i,n-1} \right|$ représentant en

chaque point $P_i$ la valeur de la différence de luminance du point avec son point homologue de l'image précédente, et compare chaque différence inter-image $\Delta_i$ obtenue au seuil de densité $S(X_o)$ fourni par le dispositif de calcul de seuil 17.

Dans l'expression précédente, $E_{i,n}$ représente la valeur de luminance du point $P_i$ de l'image n et $E_{i,n-1}$ représente la valeur de luminance du point $P_i$ homologue de l'image n-1.

Selon le mode de réalisation représenté à la figure 4, l'organe de calcul 18 comprend une mémoire morte programmable 44 du type PROM qui contient une table des différences inter-image $\Delta_i$. La mémoire 44 est reliée par ses entrées d'adressage à la sortie d'un soustracteur 46 dont les entrées A et B sont reliées respectivement aux sorties de deux registres 47 et 48. Dans ces conditions, les valeurs binaires des échantillons de luminance $E_{i,n}$ et $E_{i,n-1}$ qui sont appliquées aux entrées 25 et 27 de l'organe de calcul 18 sont mémorisées au rythme des signaux d'horloge point HP à l'intérieur respectivement des registres 47 et 48. Les contenus des registres 47 et 48 sont soustraits l'un de l'autre au rythme des signaux d'horloge point HP par le soustracteur 46 qui délivre un nombre binaire sous la forme d'un complément à 2 de la différence des contenus des deux registres 47 et 48. Ce résultat est utilisé pour adresser le contenu de la mémoire 44 qui fournit sur ses lignes de données la différence inter-image $\Delta_i$ correspondant au nombre binaire obtenu en sortie du soustracteur 44.

La différence inter-image $\Delta_i$ est appliquée sur l'entrée A d'un comparateur 49. La valeur du seuil $S(X_o)$ calculée précédemment par le dispositif de calcul de seuil 17 est appliquée sur l'entrée B du comparateur 49 qui délivre sur sa sortie un signal $MOV_i$ de valeur binaire 1, lorsque la différence $\Delta_i$ est supérieure au seuil $S(X_o)$ calculé et une valeur binaire 0 dans le cas contraire.

Le signal $MOV_i$ ainsi obtenu, permettrait, s'il était utilisé directement pour commander le codage des zones en mouvement, d'obtenir une image assez fidèle des zones en mouvement de l'image, notamment, lorsque le fond de l'image présente une structure texturée ou des contours importants. Toutefois le dispositif qui vient d'être décrit impose pour obtenir une bonne qualité de l'image dans les zones uniformes en mouvement, un seuil de détection $S_{MIN}$ faible, ce qui a pour conséquence la détection également d'un bruit important. Pour remédier à cet inconvénient l'image binaire des points en mouvement obtenue en sortie de l'organe de calcul 18 est filtrée par le dispositif de filtrage par densité 19, dont un mode de réalisation est représenté à la figure 4.

Le dispositif de filtrage par densité 19 représenté à la figure 4 comprend un ensemble de lignes à retard 50, 51, 52, 53 montées en série à la sortie du comparateur 49, chaque ligne ayant un retard équivalent à la durée d'analyse des échantillons numériques analysés dans une ligne de l'image. Les sorties des lignes à retard 50 à 53 sont reliées respectivement aux entrées d'adressage d'une mémoire morte programmable 54 du type PROM, contenant une table de densités définie à partir de la relation (5). Les sorties de données D de la mémoire 54 sont reliées aux entrées respectives d'un premier registre 55 d'un ensemble de registres 55 à 60, tous montés en série, de manière à constituer une pile de registres à décalage fonctionnant suivant le principe FIFO abréviation du terme anglo-saxon "First in First out". Ces registres sont commandés sur leur entrée de chargement L, à chaque impulsion du signal HP pour transférer leur contenu dans le registre suivant. Les sorties des registres 55 et 60 sont couplées aux entrées A et B d'un soustracteur 61 dont la sortie C fournit la différence des contenus des registres 55 et 60 et la sortie D fournit le signe de cette différence aux entrées respectives du registre 62. La sortie du registre 62 est couplée à l'entrée A d'un additionneur-soustracteur 63 dont l'entrée B est couplée à la sortie d'un registre accumulateur 64, l'entrée du registre accumulateur 64 étant reliée à la sortie de l'additionneur-soustracteur 63. En fonction du signe enregistré dans le registre 62 l'additionneur-soustracteur 63 additionne ou soustrait les deux opérandes fournis respectivement par les sorties du registre 62 et de l'accumulateur 64. La sortie de l'accumulateur 64 est reliée à une première entrée d'un comparateur 65 sur la deuxième entrée duquel est appliquée une valeur binaire prédéterminée, correspondant à une valeur de seuil de référence de densité par rapport à laquelle les densités de point en mouvement sont comparées, transmise par un dispositif extérieur, non représenté. Le comparateur 65 compare par conséquent à tout instant, le contenu de l'accumulateur 64 au seuil de référence de densité appliqué sur sa deuxième entrée, pour délivrer sur sa sortie un signal IBF à destination de la borne 28 du détecteur de mouvement indiquant que le point pour lequel la densité est calculée est ou n'est pas un point en mouvement. Lorsque la densité calculée pour un point d'image $P_i$ , contenue dans l'accumulateur 64 est plus grande que le seuil de densité de référence, le signal IBF fourni par le comparateur 65 prend la valeur logique 1 pour indiquer que le point correspondant est un point en mouvement. Le signal IBF prend la valeur binaire 0 dans le cas contraire. Des registres points 66 sont couplés entre la sortie de la ligne à retard 51 et l'entrée de validation du comparateur 65 de manière à créer un retard équivalent au retard introduit par les registres 55 à 60, le soustracteur 61 et le registre 62, et fournir le cas échéant un signal de validation du comparateur 65 de chaque point $P_i$ de l'image présumé en mouvement par l'organe de calcul de différence inter-image et de comparaison 18.

Bien que le principe de la présente invention ait été décrit ci-dessus en relation avec des exemples particuliers de réalisation, il faut comprendre que la description n'a été faite qu'à titre d'exemple et ne limite pas la portée de l'invention.

D'autres variantes de réalisation sont en effet possibles, en modifiant notamment l'ordre des étapes du procédé et en utilisant d'autres structures notamment pour réaliser le dispositif de filtrage par densité.

L'invention n'est pas non plus limitée à une application des détecteurs de mouvement pour réduire le bruit inter-image en télévision numérique, elle peut également trouver d'autres usages et notamment s'appliquer au suivi des cibles en mouvement, par des caméras de télévision.

**0143010**

## REVENDICATIONS

1. Procédé de détection de points en mouvement dans une image de télévision pour systèmes de télévision numérique à compression de débit, à rafraîchissement conditionnel, caractérisé en ce qu'il consiste à calculer un indicateur de gradient $(I_g)$ de luminance et/ou de chrominance en chaque point de l'image, à calculer en fonction de chaque gradient obtenu une valeur de seuil $S(X_o)$, à mesurer la différence de luminance et/ou de chrominance inter-image de chaque point de l'image, à comparer la différence inter-image obtenue en chaque point à la valeur de seuil correspondante calculée, à appliquer le résultat de la comparaison à l'entrée d'un dispositif de filtrage par densité (19) pour détecter la densité de points en mouvement proches de chaque point analysé et à comparer la densité obtenue en chaque point analysé à un seuil de densité prédéterminé pour déclarer chaque point analysé en mouvement lorsque la densité qui lui correspond dépasse le seuil de densité prédéterminé.

2. Procédé selon la revendication 1, caractérisé en ce que l'indicateur de gradient $(I_g)$ est obtenu en calculant la moyenne des écarts en valeur absolue des luminances et/ou des chrominances entre chaque point analysé et ses points voisins.

3. Procédé selon la revendication 1, caractérisé en ce que l'indicateur de gradient $(I_g)$ est obtenu en choisissant l'écart le plus grand en valeur absolue parmi les écarts de luminance et/ou de chrominance entre le point analysé et chacun de ses points voisins.

4. Procédé selon la revendication 3, caractérisé en ce qu'il consiste à comparer en chaque point analysé dans l'image courante, l'écart maximum de luminance et/ou de chrominance entre le point courant analysé et chacun de ses points voisins, à l'écart maximum de luminance et/ou de chrominance du point homologue au point courant ou analysé dans l'image précédente avec ceux de ses points voisins également dans l'image précédente, et à choisir comme indicateur de gradient l'écart maximum obtenu dans l'une ou l'autre image qui est le plus faible.

5. Procédé selon l'une quelconque des revendications 1, 2, 3 et 4, caractérisé en ce que la valeur de seuil $(S(X_o))$ est proportionnelle à l'indicateur de gradient $(I_g)$ calculé.

**0143010**

6. Procédé selon l'une quelconque des revendications 1 à 5, caractérisé en ce que la valeur de seuil $(S(X_o))$ est maintenue comprise entre deux valeurs de seuils minimum et maximum $(S_{MIN})$, $(S_{MAX})$ choisies de manière à mieux coder les zones uniformes en mouvement de l'image, et à ne pas perdre des zones en mouvement texturées ou présentant des contours.

7. Procédé selon l'une quelconque des revendications 1 à 6, caractérisé en ce que la densité de points en mouvement proches de chaque point analysé, est mesurée à l'intérieur d'un espace de dimension $p \times q$, où p désigne le nombre de points pris en considération selon une première direction de l'image et q désigne le nombre de points pris en considération selon une deuxième direction de l'image perpendiculaire à la première.

8. Procédé selon la revendication 7, caractérisé en ce que la densité en chaque point est calculée en comptant le nombre de points présumés en mouvement obtenu à l'entrée du dispositif de filtrage par densité (19) à l'intérieur de l'espace de dimension $q \times p$.

9. Dispositif de détection de points en mouvement dans une image de télévision pour la mise en oeuvre du procédé selon l'une quelconque des revendications 1 à 8, caractérisé en ce qu'il comprend un dispositif de calcul de seuil (17) à utiliser pour détecter le mouvement de chaque point d'image, un organe de calcul de la différence inter-image et de comparaison (18) sensible au seuil calculé par le dispositif de calcul de seuil (17), ainsi qu'un dispositif de filtrage par densité (19) connecté à la sortie du dispositif détecteur de mouvement pour détecter la densité de points en mouvement proches de chaque point analysé et comparer la densité obtenue, autour de chaque point, à un seuil de densité prédéterminé $S_d$ pour définir, à partir de ce seuil, l'état statique ou en mouvement de chaque point d'image analysé.

10. Dispositif selon la revendication 9, caractérisé en ce que le dispositif de filtrage par densité (19) comprend une mémoire morte programmable adressée par une combinaison binaire des états présumés fixes ou en mouvement du point analysé et des points voisins fournie par l'organe de calcul de la différence inter-image et de comparaison (18) et dont le contenu est constitué par une table de densité, de manière à

15 0143010

fournir une valeur de densité en fonction de l'état binaire de chaque combinaison appliquée sur les entrées d'adresse de la mémoire programmable.

11. Utilisation du procédé et du dispositif selon l'une quelconque des revendications 1 à 10 à la réduction du bruit inter-image en télévision.

12. Utilisation du procédé et du dispositif selon l'une quelconque des revendications 1 à 10 au suivi de cibles en mouvement.

Fig.1

Fig.2

Fig.3

Fig.4

Office européen
des brevets

**RAPPORT DE RECHERCHE EUROPEENNE**

## DOCUMENTS CONSIDERES COMME PERTINENTS

| Catégorie | Citation du document avec indication. en cas de besoin, des parties pertinentes | Revendication concernée | CLASSEMENT DE LA DEMANDE (Int. Cl.4) |
|---|---|---|---|
| A | US-A-4 027 331 (R.C. NICOL) | | H 04 N 7/13 |
| A | US-A-3 716 667 (D.J. CONNOR) | | |
| A | US-A-3 761 613 (J. LIMB) | | |
| A | THE BELL SYSTEM TECHNICAL JOURNAL, vol. 53, no. 6, juillet/août 1974, pages 1137-1173, American Telephone and Telegraph Company, New York, USA; J.O. LIMB et al.: "Combining intraframe and frame-to-frame coding for television" | | |
| A | THE BELL SYSTEM TECHNICAL JOURNAL, vol. 52, no. 1, janvier 1973, pages 35-51, American Telephone and Telegraph Company, New York, USA; D.J. CONNOR et al.: "A frame-to-frame picturephone coder for signals containing differential quantizing noise" | | DOMAINES TECHNIQUES RECHERCHES (Int. Cl.4)<br><br>H 04 N |

Le présent rapport de recherche a été établi pour toutes les revendications

| Lieu de la recherche<br>LA HAYE | Date d'achèvement de la recherche<br>22-12-1984 | Examinateur<br>VERSCHELDEN J. |
|---|---|---|

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

OEB Form 1503 03 82